# EUROPEAN PATENT APPLICATION

(11) **EP 2 581 689 A1**
(43) Date of publication of application: **17.04.2013**
(21) Application number: 11792343.3
(22) Date of filing: 02.06.2011
(51) Int. Cl.: F25B 1/00, F24H 1/00, F25B 27/02

(54) **ENGINE-DRIVEN HOT WATER SUPPLY CIRCUIT, AND ENGINE-DRIVEN HOT WATER SUPPLY SYSTEM USING SAME**

(30) Priority: 11.06.2010 JP 2010133710
(71) Applicant: Yanmar Co., Ltd., Osaka-shi, Osaka 530-8311 (JP)
(72) Inventor: SUGIMORI, Keiji, Osaka-shi Osaka 531-0076 (JP); NAKAMURA, Hirotaka, Osaka-shi Osaka 531-0076 (JP); NODA, Kazunari, Osaka-shi Osaka 531-0076 (JP)
(74) Representative: Hinkelmann, Klaus
(86) International application number: PCT/JP2011/062695
(87) International publication number: WO 2011/155386

(57) **Abstract**

[Purpose] Disclosed is a configuration for combining exhausted gas bypasses when the water temperature does not reach the target high temperature by only controlling an RPM of a compressor.

[Constitution] An engine-driven hot water supply circuit 1 configured to drive a compressor 21 using an engine 30 includes a refrigerant-water heat exchanger 23 that exchanges heat between an exhaust refrigerant and a supply water, a water-water heat exchanger 31 disposed downstream of the refrigerant-water heat exchanger 23 that exchanges heat between an engine cooling water and the supply water and an evaporator 25 to evaporate a refrigerant through heat exchange with an air, wherein a capacity of the evaporator is larger than a capacity of the refrigerant-water heat exchanger, an RPM of the engine is increased when a temperature of the supply water at an outlet port of the water-water heat exchanger is lower than a target temperature and an opening degree of an exhaust gas valve, which bypasses an exhaust path and an intake path of the compressor 21, is adjusted within a range in which exhaust pressure of the compressor 21 does not exceed upper limit exhaust pressure when the temperature of the supply water is lower than the target temperature after the RPM of the engine has reached an upper limit RPM determined based on an upper limit value of the exhaust pressure.

## Description

### TECHNICAL FIELD

The present invention relates to an engine-driven hot water supply circuit and an engine-driven hot water supply system using the hot water supply circuit.

### BACKGROUND ART

In general, a hot water supply circuit of an engine-driven hot water supply system, which uses refrigerant condensation heat and engine waste heat of a refrigerant circuit configured to drive a compressor by using an engine, is generally known in the art (see, patent documents 1 and 2).

According to the related art, there is disclosed an engine-driven hot water supply circuit that controls the tapping temperature to a target value by increasing or decreasing the RPM of a compressor or suppresses the increase in the exhaust temperature by bypassing the refrigerant liquefied in the condenser to an intake side of the compressor (see, patent document 3).

In addition, according to another related art, there is disclosed an engine-driven hot water supply circuit that maintains the exhaust temperature at the high temperature by bypassing exhaust gas to an intake side of a compressor (see, patent document 4).

### PRIOR ART DOCUMENTS

### PATENT DOCUMENTS

Patent Document 1: Japanese Unexamined Patent Publication No. 59-197772
Patent Document 2: Japanese Unexamined Patent Publication No. 61-122450
Patent Document 3: Japanese Patent No. 4116645
Patent Document 4: Japanese Unexamined Patent Publication No. 2004-61071

### SUMMARY OF THE INVENTION

### PROBLEMS TO BE SOLVED BY THE INVENTION

However, in the case of the conventional engine-driven hot water supply circuit that increases or decreases the RPM of the compressor, the water temperature cannot increased to a predetermined temperature (for instance, 90°C) higher than the refrigerant condensation temperature of 60°C to 70°C if only the RPM of the compressor is increased because of the limitation in the upper limit value of the RPM of the compressor or the limitation in the pressure-resistant value of the condenser.

In addition, in the case of the conventional engine-driven hot water supply circuit that bypasses the exhaust gas to the intake side of the compressor, the heating of the condenser allows the bypass of the exhaust gas only in a low-load area without allowing the bypass of the exhaust gas in a high-load area and the bypass of the exhaust gas is prevented in a high-rotation area of the compressor.

The present invention has been made by taking the above problems into consideration, and the present invention provides a hot water supply circuit using refrigerant condensation heat and engine waste heat of a refrigerant circuit configured to drive a compressor by using an engine, in which exhaust gas is bypassed when the water temperature does not reach the target high temperature by only controlling the RPM of a compressor is controlled.

In addition, the liquid refrigerant is bypassed in order to suppress the excessive increase in the exhaust temperature caused by the bypass of the exhaust gas.

Further, to the contrary, if the water temperature cannot be suppressed to the target temperature by only operating the compressor with the lower limit RPM, the exhaust gas is bypassed.

### MEANS FOR SOLVING THE PROBLEM

In order to solve the above problem, the present invention provides an engine-driven hot water supply circuit configured to drive a compressor using an engine, in which the engine-driven hot water supply circuit includes a refrigerant-water heat exchanger that exchanges heat between an exhaust refrigerant and a supply water, a water-water heat exchanger disposed downstream of the refrigerant-water heat exchanger that exchanges heat between an engine cooling water and the supply water and an evaporator to evaporate a refrigerant through heat exchange with an air, wherein a capacity of the evaporator is larger than a capacity of the refrigerant-water heat exchanger, an RPM of the engine is increased when a temperature of the supply water at an outlet port of the water-water heat exchanger is lower than a target temperature, and, after the RPM of the engine has reached an upper limit RPM determined based on an upper limit value of an exhaust pressure and if the temperature of the supply water is lower than the target temperature, an opening degree of an exhaust gas valve, which bypasses an exhaust path and an intake path of the compressor, is adjusted within a range in which exhaust pressure of the compressor does not exceed upper limit exhaust pressure.

In addition, in order to solve the above problem, the present invention provides an engine-driven hot water supply circuit, wherein, when the exhaust temperature is higher than a predetermined temperature, an opening degree of an injection valve, which bypasses a path ranging from the refrigerant-water heat exchanger to an expansion value disposed upstream of the evaporator and the intake path of the compressor, is adjusted such that the exhaust temperature is set within a predetermined range.

Further, in order to solve the above problem, the present invention provides an engine-driven hot water supply circuit configured to drive a compressor using an engine, in which the engine-driven hot water supply circuit includes a refrigerant-water heat exchanger that exchanges heat between an exhaust refrigerant and a supply water, a water-water heat exchanger disposed downstream of the refrigerant-water heat exchanger that exchanges heat between an engine cooling water and the supply water, and an evaporator to evaporate a refrigerant through heat exchange with an air, wherein an RPM of the engine is decreased when a temperature of the supply water at an outlet port of the water-water heat exchanger is higher than a target temperature; after the engine RPM has reached a lower limit RPM and if the temperature of the supply water is higher than the target temperature, an exhaust gas valve, which bypasses an exhaust path and an intake path of the compressor, is opened; and an upper limit of an opening degree of the expansion valve disposed upstream of the evaporator is adjusted such that a differential value between an air temperature and an evaporation temperature, which is determined based on refrigerant pressure in the intake path of the compressor, is set within a predetermined range.

In addition, in order to solve the above problem, the present invention provides an engine-driven hot water supply system including the engine-driven hot water supply circuit.

### EFFECT OF THE INVENTION

As described above, according to the present invention disclosed in claim 1, after the RPM of the engine has reached the upper limit RPM determined based on the upper limit value of the exhaust pressure and if the temperature of the supply water is lower than the target temperature, the opening degree of the exhaust gas valve, which bypasses the exhaust path and the intake path of the compressor, is adjusted within a range in which exhaust pressure of the compressor does not exceed upper limit exhaust pressure , so that the evaporation temperature of the refrigerant becomes higher than the air temperature in the evaporator and the refrigerant is liquefied and stagnated in the evaporator. In addition, the capacity of the evaporator is designed to be larger than the capacity of the refrigerant-water heat exchanger, thereby causing the refrigerant exhausted to the refrigerant-water heat exchanger to be insufficient and increasing the sensible heat ratio of the exhaust refrigerant of the refrigerant-water heat exchanger. As a result, the heat exchange is possible in the refrigerant-water heat exchanger at the temperature higher than refrigerant condensation heat under high pressure, which is determined based on the engine RPM, so that the temperature of the supply water can be increased up to the target water temperature.

In addition, according to the present invention disclosed in claim 2, the path ranging from the refrigerant-water heat exchanger to the expansion value disposed upstream of the evaporator and the intake path of the compressor are bypassed, so that the exhaust temperature of the refrigerant from the compressor can be prevented from being excessively increased.

Further, according to the present invention disclosed in claim 3, after the engine RPM has reached the lower limit RPM and if the temperature of the supply water is higher than the target temperature, the circulation amount of the refrigerant can be reduced by opening the exhaust gas valve, which bypasses the exhaust path and the intake path of the compressor. Thus, the temperature of the supply water can be limited to the target temperature by suppressing the heat exchange in the refrigerant-water heat exchanger. At this time, the upper limit of the opening degree of the expansion valve disposed upstream of the evaporator is adjusted such that the differential value between the air temperature and the evaporation temperature, which is determined based on refrigerant pressure in the intake path of the compressor, is set within the predetermined range. Therefore, the evaporation temperature of the refrigerant in the evaporator can be prevented from rising higher than the air temperature, so that the engine-driven hot water supply circuit can be continuously operated.

### BRIEF DESCRIPTION OF THE DRAWINGS

FIG. 1 is a circuit diagram schematically showing the structure of an engine-driven hot water supply circuit according to the present invention.
FIG. 2 is a P-h graph for explaining a behavior of a heat pump cycle in a normal operation and a high pressure suppression operation.
FIG. 3 is a flowchart of a high pressure suppression control using an engine-driven hot water supply circuit shown in FIG. 1.
FIG. 4 is a flowchart of an exhaust temperature suppression control using an engine-driven hot water supply circuit shown in FIG. 1.
FIG. 5 is a flowchart of an evaporator refrigerant stagnation suppression control using an engine-driven hot water supply circuit shown in FIG. 1.

### EMBODIMENTS FOR CARRYING OUT THE INVENTION

Hereinafter, embodiments of the present invention will be described with reference to the accompanying drawings.

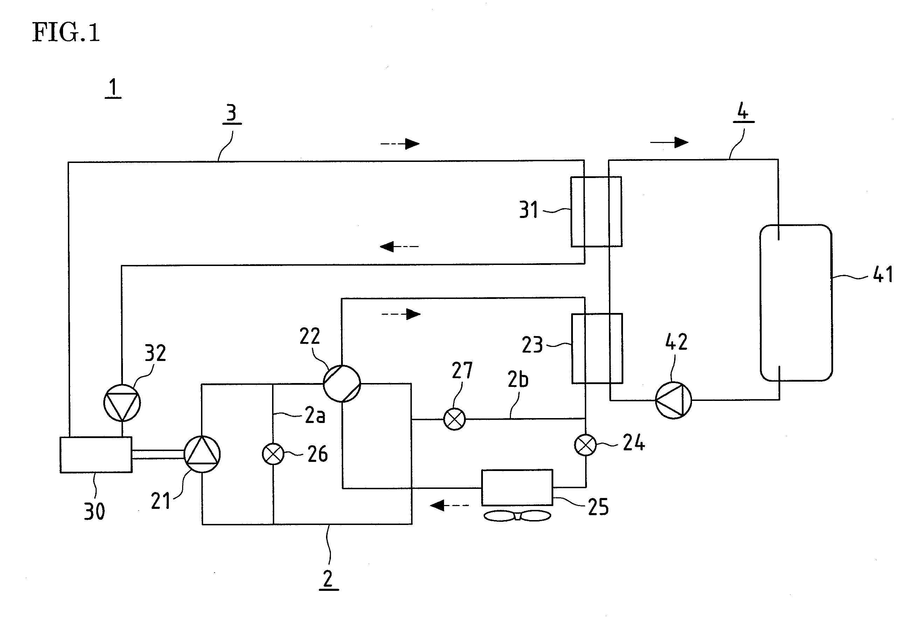

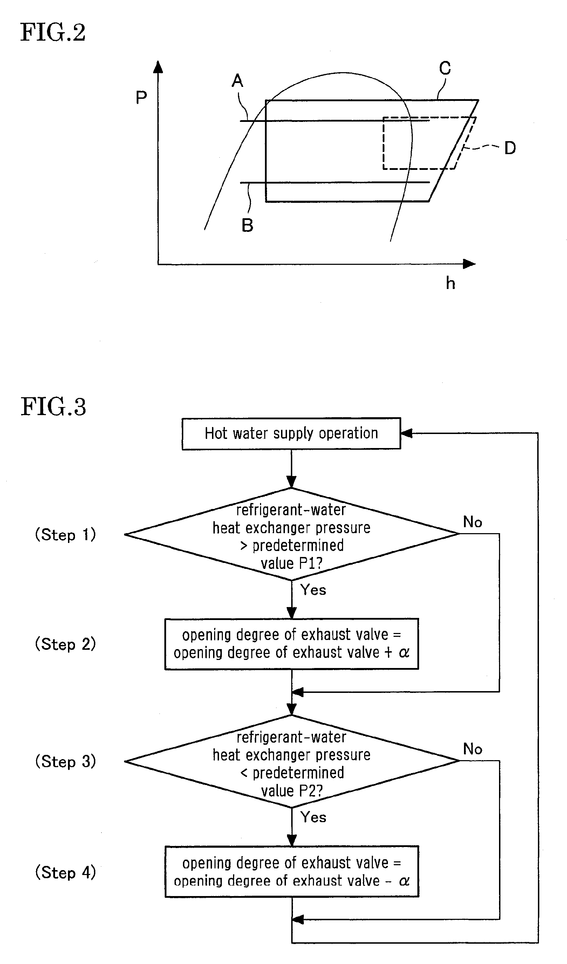

FIG. 1 is a circuit diagram of an engine-driven hot water supply circuit 1 according to the present invention, and FIG. 2 shows a behavior of a heat pump cycle in a normal operation and a high pressure suppression operation of the engine-driven hot water supply circuit 1.

The engine-driven hot water supply circuit 1 includes a main circuit 2, a cooling water circuit 3 and a hot water supply circuit 4 and is equipped with functions of high pressure suppression control, exhaust temperature suppression control, or evaporator refrigerant stagnation suppression control.

The main circuit 2 is configured to circulate a refrigerant in such a manner that the refrigerant compressed in a compressor 21 is condensed in a refrigerant-water heat exchanger 23 through a 4-way valve 22, evaporated in an evaporator 25 through an expansion valve 24, and then returned to the compressor 21 through the 4-way valve 22.

In the main circuit 2, the compressor is driven by an engine 30. The driving force of the engine 30 can be transferred to the compressor 21 through a belt drive, a chain drive or a shaft drive without special limitation.

In the main circuit 2, a hot gas bypass path 2a is provided between an exhaust side and an intake side of the compressor 21 and an exhaust gas valve 26 is installed in the hot gas bypass path 2a. In addition, an injection path 2b is provided between an outlet side of the refrigerant-water heat exchanger 23 and the intake side of the compressor 21 and an injection valve 27 is installed in the injection path 2b.

The cooling water circuit 3 is configured to circulate cooling water in such a manner that the cooling water that absorbs discharge heat of the engine 30 while passing through the engine 30 dissipates heat to the supply water in a water-water heat exchanger 31 and then passes through the engine 30 by way of a pump 32.

The hot water supply circuit 4 is configured such that the supply water from a water reservoir 41 can return to the water reservoir 41 after being heated through the refrigerant-water heat exchanger 23 and water-water heat exchanger 31 by way of the pump 32.

Hereinafter, the operation of the engine-driven hot water supply circuit 1 having the above configuration will be described.

First, in the normal operation, the refrigerant from the compressor 21 is supplied to the refrigerant-water heat exchanger 23 through the 4-way valve 22 and condensed in the refrigerant-water heat exchanger 23 while dissipating heat. Then, the refrigerant is evaporated in the evaporator 25 through the expansion valve 24 and then returns to the compressor 21 through the 4-way valve 22. This circulation is repeated.

Meanwhile, in the hot water supply circuit 4, the supply water is heated in the refrigerant-water heat exchanger 23 due to heat dissipation from the refrigerant and then supplied to the water-water heat exchanger 31. In the water-water heat exchanger 31, the supply water is further heated due to heat dissipation from the cooling water that receives the discharge heat of the engine 30 and then is stored in the water reservoir 41.

At this time, the heating temperature of the supply water stored in the water reservoir 41 can be controlled by varying the RPM of the compressor 21 through the driving of the engine 30.

In addition, if there is excessive capability, the exhaust gas valve 26 is opened even if the RPM of the compressor 21 reaches the lower limit value. Thus, the refrigerant at the exhaust side of the compressor 21 returns to the intake side of the compressor 21 through the hot gas bypass path 2a, so that the amount of the refrigerant supplied to the refrigerant-water heat exchanger 23 is reduced, thereby lowering the amount of heat dissipation by the refrigerant-water heat exchanger 23.

Hereinafter, the function of high pressure suppression control in the engine-driven hot water supply circuit 1 will be described.

The condensation temperature of the refrigerant in the refrigerant-water heat exchanger 23 is higher than the temperature of the supply water heated in the refrigerant-water heat exchanger 23. Thus, if the supply water has the high temperature, the condensation temperature of the refrigerant is more increased and exhaust pressure of the refrigerant exhausted from the compressor 21 becomes high.

That is, as shown in FIG. 2, in the main circuit 2, if the pressure corresponding to the temperature of the supply water heated in the refrigerant-water heat exchanger 23 is represented as a horizontal line A and the pressure corresponding to the temperature of a heat source (external air) for evaporating the refrigerant in the evaporator 25 is represented as a horizontal line B, a heat pump cycle C is not established unless the refrigerant that circulates the main circuit 2 has the pressure higher than the horizontal line A in the refrigerant-water heat exchanger 23 and lower than the horizontal line B in the evaporator 25. Meanwhile, in FIG. 2, the longitudinal axis represents pressure P of the refrigerant and the transverse axis represents enthalpy h of the refrigerant.

However, even if the pressure is higher than the horizontal line A, various elements constituting the main circuit 2, such as the compressor 21, have the upper limit of usable pressure, so the elements cannot continuously operated at the pressure higher than the upper limit pressure.

Therefore, if the temperature of the supply water introduced into the refrigerant-water heat exchanger 23 is increased beyond a predetermined temperature, the compressor 21 is subject to the pressure higher than the limit pressure-resistance, so the operation cannot continued. Or, even if the compressor 21 is driven with the upper limit RPM of the engine 30, the refrigerant cannot heated to the level of the condensation temperature of the refrigerant desired by the predetermined temperature of the supply water.

Under such circumstances, the high pressure suppression control is performed to establish the heat pump cycle D in order to prevent the compressor 21 from being subject to the pressure beyond the limit pressure-resistance or in order to prevent the increase in the condensation temperature of the refrigerant even if the supply water has the high temperature. The high pressure suppression control is started by opening the exhaust gas valve 26 in the hot gas bypass path 2a to return the refrigerant from the exhaust side of the compressor 21 to the intake side of the compressor 21. By this operation, the pressure of the refrigerant in the evaporator 25 is increased and the temperature of the refrigerant in the evaporator 25 is increased over the temperature of the heat source (external air) for evaporating the refrigerant in the evaporator 25. In this state, the refrigerant is condensed while dissipating heat without being evaporated in the evaporator 25, and the refrigerant is stagnated in the evaporator 25. Then, the amount of the refrigerant supplied to the refrigerant-water heat exchanger 23 becomes insufficient, and the refrigerant is discharged from the refrigerant-water heat exchanger 23 before it has been completely liquefied, so that the condensation temperature is lowered. Thus, the sensible heat ratio is increased when the heat is dissipated to the supply water in the refrigerant-water heat exchanger 23, so that the heat dissipation is completed and the heat pump cycle D is established in which the ratio of the heat dissipation is reduced in condensation.

In the high pressure suppression control, as shown in FIG. 3, it is determined whether the pressure of the refrigerant in the refrigerant-water heat exchanger 23 is higher than a predetermined value P1 during the hot water supply operation (step 1).

If the pressure is higher than the predetermined value P1, the opening degree of the exhaust gas valve 26 is increased by α to set the pressure lower than the predetermined value P1 (step 2).

If the pressure is lower than the predetermined value P1, the next step is performed while keeping the opening degree of the exhaust gas valve 26 as it is.

Then, it is determined whether the pressure of the refrigerant in the refrigerant-water heat exchanger 23 is lower than a predetermined value P2 (step 3).

If the pressure is lower than the predetermined value P2, the opening degree of the exhaust gas valve 26 is reduced by α (step 4).

If the pressure is higher than the predetermined value P2, the control is repeated from step 1 while keeping the opening degree of the exhaust gas valve 26 as it is. Finally, if the pressure of the refrigerant in the refrigerant-water heat exchanger 23 is continuously kept lower than the predetermined value P2, the exhaust gas valve 26 is completely closed and the heat pump cycle D in the high pressure suppression control is changed to the normal heat pump cycle C.

According to the high pressure suppression control, the heat exchange is possible in the refrigerant-water heat exchanger 23 at the temperature higher than the refrigerant condensation heat (for instance, 60°C to 70°C) under the high pressure, which is determined based on the upper limit RPM of the engine 30, so that the temperature of the supply water can be increased to the target water temperature (for instance, 90°C).

In addition, in the high pressure suppression control, when the heat pump cycle D is performed, since the refrigerant supplied to the refrigerant-water heat exchanger 23 is insufficient because the refrigerant is stagnated in the evaporator 25, the evaporator 25 has a capacity larger than a capacity of the refrigerant-water heat exchanger 23.

In the flowchart shown in FIG. 3, the sequence of steps 1, 2, 3 and 4 may be changed into steps 3, 4, 1 and 2.

In addition, the predetermined values P1 and P2 of the pressure of the refrigerant in the refrigerant-water heat exchanger 23 are properly determined depending on the refrigerant, the temperature of a region and a capacity of the engine-driven hot water supply circuit 1 in use. In detail, the predetermined value P1 is determined in such a manner that the pressure of each element of the main circuit 2, such as the compressor 21, which is calculated based on the predetermined value P1 of the pressure of the refrigerant in the refrigerant-water heat exchanger 23, does not exceed the limit pressure-resistance. In addition, the predetermined value P2 is set such that it is permitted to perform the normal heat pump cycle C at the pressure under the predetermined value P2 of the pressure of the refrigerant in the refrigerant-water heat exchanger 23.

Hereinafter, the function of the exhaust temperature suppression control in the engine-driven hot water supply circuit 1 will be described.

In the heat pump cycle D of the high pressure suppression control, since the high-temperature exhaust gas of the refrigerant from the compressor 21 returns to the intake side of the compressor 21 through the hot gas bypass path 2a, it is concerned that the intake temperature of the compressor 21 is increased and the exhaust temperature of the compressor 21 is increased beyond the usable range of the compressor 21. In this case, even if the expansion valve 24 is opened to lower the intake temperature, this action only causes the refrigerant to be stagnated in the evaporator 25 and does not lower the intake temperature.

Under such circumstances, in order to suppress the increase in the exhaust temperature of the compressor 21, the injection valve 27, which is installed in the injection path 2b, is opened and the refrigerant liquefied in the refrigerant-water heat exchanger 23 is supplied to the intake side of the compressor 21. Thereby, the temperature of the intake side is lowered and the operation shifts to the exhaust temperature suppression control where the temperature at the intake side of the compressor 21 is lowered.

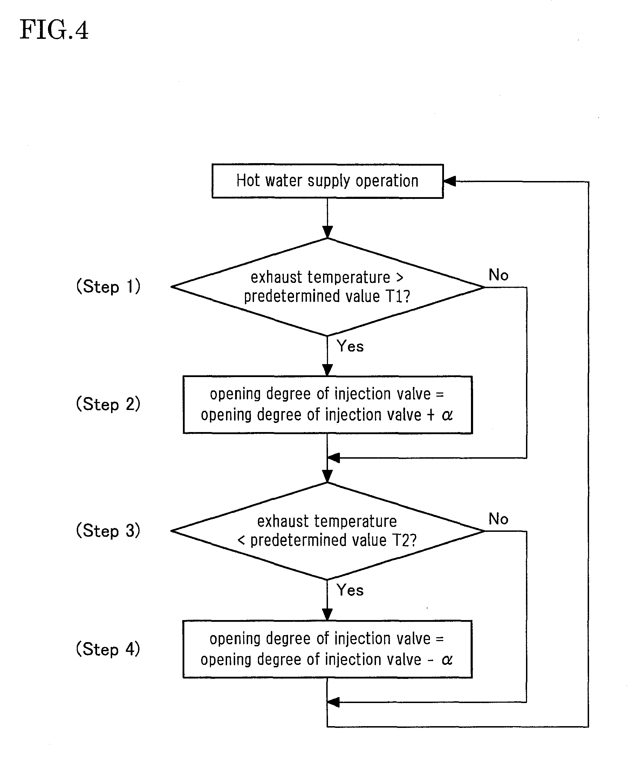

In the exhaust temperature suppression control, as shown in FIG. 4, it is determined whether the exhaust temperature of the refrigerant from the compressor 21 is higher than a predetermined value T1 during the hot water supply operation under the heat pump cycle D (step 1).

If the temperature is higher than the predetermined value T1, the opening degree of the injection 27 is increased by α to set the pressure lower than the predetermined value T1 (step 2).

If the temperature is lower than the predetermined value T1, the next step is performed while keeping the opening degree of the injection gas valve 27 as it is.

Then, it is determined whether the exhaust temperature of the refrigerant from the compressor 21 is lower than a predetermined value T2 (step 3).

If the pressure is lower than the predetermined value T2, the opening degree of the injection valve 27 is reduced by α (step 4).

If the temperature is higher than the predetermined value T2, the control is repeated from step 1 while keeping the opening degree of the injection valve 27 as it is. Finally, if the exhaust temperature of the refrigerant from the compressor 21 is continuously kept lower than the predetermined value T2, the injection valve 27 is completely closed and the exhaust temperature suppression control is finished.

According to the exhaust temperature suppression control, it is possible to prevent the exhaust temperature of the refrigerant from the compressor 21 from being excessively increased in the heat pump cycle D.

In the flowchart shown in FIG. 4, the sequence of steps 1, 2, 3 and 4 may be changed into steps 3, 4, 1 and 2.

In addition, the predetermined values T1 and T2 of the exhaust temperature of the refrigerant from the compressor 21 are properly determined depending on the refrigerant, the temperature of a region and a capacity of the engine-driven hot water supply circuit 1 in use. In detail, the predetermined value T1 is determined in such a manner that the compressor 21 can be continuously operated when the temperature is lower than the predetermined value T1. In addition, the predetermined value T2 is set such that the operation can be available based on the high pressure suppression control without opening the injection valve 27 when the temperature is kept lower than the predetermined value T2.

Hereinafter, the function of the evaporator refrigerant stagnation suppression control in the engine-driven hot water supply circuit 1 will be described.

In the normal heat pump cycle C, other than the heat pump cycle D of the high pressure suppression control, if there is excessive capability, the exhaust gas valve 26 is opened even if the compressor 21 is driven with the lower limit RPM of the engine 30.

Thus, the refrigerant at the exhaust side of the compressor 21 returns to the intake side of the compressor 21 through the hot gas bypass path 2a, so that the amount of the refrigerant supplied to the refrigerant-water heat exchanger 23 is reduced, thereby lowering the amount of heat dissipation by the refrigerant-water heat exchanger 23.

However, if the supply amount of the refrigerant returned to the intake side of the compressor 21 through the hot gas bypass path 2a is increased, evaporation pressure in the evaporator 25 is increased and the evaporation temperature of the refrigerant in the evaporator 25 becomes higher than the temperature of the heat source (external air) for evaporating the refrigerant in the evaporator 25. Thus, it is concerned that the refrigerant is condensed while dissipating heat without being evaporated in the evaporator 25 so that the refrigerant is stagnated in the evaporator 25. If the refrigerant is stagnated in the evaporator 25, the supply of the refrigerant to the refrigerant-water heat exchanger 23 is reduced so that the condensed latent heat is not sufficiently exhibited, thereby causing deteriorating of COP (coefficient of performance = capability/power). In addition, when the stagnation is solved, the liquefied refrigerant returns to the compressor 21, thereby deteriorating the reliability of the compressor 21.

Thus, the evaporator refrigerant stagnation suppression control is performed to prevent the refrigerant from being stagnated in the evaporator even if the refrigerant at the exhaust side of the compressor 21 is returned to the intake side of the compressor 21 through the hot gas bypass path 2a when the exhaust gas valve 26 is opened. In the evaporator refrigerant stagnation suppression control can be achieved by regulating the upper limit of the opening degree of the expansion valve 24 such that the increase in the evaporation temperature of the refrigerant in the evaporator 25 can be suppressed.

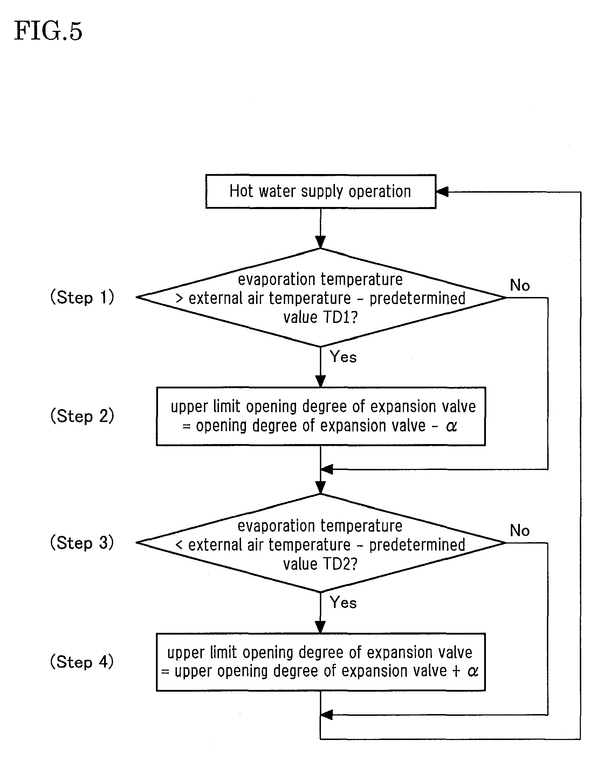

In the evaporator refrigerant stagnation suppression control, as shown in FIG. 5, it is determined whether the evaporation temperature of the refrigerant in the evaporator 25 during the hot water supply operation is higher than the differential temperature obtained by subtracting a predetermined temperature value TD1 from the external air temperature (step 1).

If the evaporation temperature of the refrigerant in the evaporator 25 is higher than the differential temperature obtained by subtracting the predetermined temperature value TD1 from the external air temperature, the upper limit opening degree of the expansion valve 24 is reduced from the present opening degree of the expansion valve 24 by α, so the upper limit opening degree of the expansion valve 24 is changed (step 2).

If the evaporation temperature of the refrigerant in the evaporator 25 is lower than the differential temperature obtained by subtracting the predetermined temperature value TD1 from the external air temperature, the next step is performed while keeping the upper limit opening degree of the expansion valve 24 as it is.

Then, it is determined whether the evaporation temperature of the refrigerant in the evaporator 25 is lower than the differential temperature obtained by subtracting a predetermined temperature value TD2 from the external air temperature (step 3).

If the evaporation temperature of the refrigerant in the evaporator 25 is lower than the differential temperature obtained by subtracting the predetermined temperature value TD2 from the external air temperature, the upper limit opening degree of the expansion valve 24 is increased from the present opening degree of the expansion valve 24 by α, so the upper limit opening degree of the expansion valve 24 is changed (step 4).

If the evaporation temperature of the refrigerant in the evaporator 25 is higher than the differential temperature obtained by subtracting the predetermined temperature value TD2 from the external air temperature, the control is repeated from step 1 while keeping the upper opening degree of the expansion valve 24 as it is.

According to the evaporator refrigerant stagnation suppression control, different from the related art in which the supply amount from the heat source of the evaporator 25 is lowered (for instance, a fan is decelerated) or an accumulator (not shown) is installed at the intake side of the compressor 21 to suppress the increase in the evaporation temperature, the increase in the evaporation temperature of the refrigerant in the evaporator 25 can be suppressed by adjusting only the opening degree of the expansion valve 24 without providing the functional parts, so that the operation under the refrigerating cycle C can be performed in the main circuit 2. In addition, since it is not necessary to install a variable speed fan (not shown) or the accumulator (not shown), the cost up can be suppressed, the reliability can be improved and the maintenance can be facilitated.

In the flowchart shown in FIG. 5, the sequence of steps 1, 2, 3 and 4 may be changed into steps 3, 4, 1 and 2.

In addition, the predetermined values TD1 and TD2 are properly determined depending on the refrigerant, the temperature of a region and a capacity of the engine-driven hot water supply circuit 1 in use. In detail, the predetermined value TD1 is determined in such a manner that the refrigerant can be effectively evaporated if the differential value between the external air temperature and the evaporation temperature of the refrigerant in the evaporator 25 is kept lower than the predetermined value TD1. In addition, the predetermined value TD2 is determined in such a manner that there is no need to suppress the increase in the evaporation temperature if the differential value between the external air temperature and the evaporation temperature of the refrigerant in the evaporator 25 is kept lower than the predetermined value TD1.

The present invention can be variously modified without departing from the spirit and the main features of the present invention. Thus, the above-described embodiments are illustrative purposes only and the present invention is not limited to such embodiments. The scope of the present invention is defined by the claims without being restricted to the contents of the specification. In addition, all modifications and changes to the claims fall within the scope of the present invention.

### INDUSTRIAL APPLICABILITY

The present invention can be used for various engine-driven hot water supply systems employed in the air conditioner or the cogeneration system.

### [DESCRIPTION OF REFERENCE NUMERALS]

- 1:: engine-driven hot water supply circuit
- 2:: main circuit
- 21:: compressor
- 23:: refrigerant-water heat exchanger
- 24:: expansion valve
- 25:: evaporator
- 26:: exhaust gas valve
- 27:: injection valve
- 30:: engine
- 31:: water-water heat exchanger

## Claims

1. An engine-driven hot water supply circuit configured to drive a compressor using an engine, the engine-driven hot water supply circuit comprising:
a refrigerant-water heat exchanger that exchanges heat between an exhaust refrigerant and a supply water;
a water-water heat exchanger disposed downstream of the refrigerant-water heat exchanger that exchanges heat between an engine cooling water and the supply water; and
an evaporator to evaporate a refrigerant through heat exchange with an air,
wherein a capacity of the evaporator is larger than a capacity of the refrigerant-water heat exchanger,
an RPM of the engine is increased when a temperature of the supply water at an outlet port of the water-water heat exchanger is lower than a target temperature, and
after the RPM of the engine has reached an upper limit RPM determined based on an upper limit value of an exhaust pressure and if the temperature of the supply water is lower than the target temperature, an opening degree of an exhaust gas valve, which bypasses an exhaust path and an intake path of the compressor, is adjusted within a range in which exhaust pressure of the compressor does not exceed upper limit exhaust pressure.

2. The engine-driven hot water supply circuit of claim 1, wherein, when an exhaust temperature is higher than a predetermined temperature, an opening degree of an injection valve, which bypasses a path ranging from the refrigerant-water heat exchanger to an expansion value disposed upstream of the evaporator and the intake path of the compressor, is adjusted such that the exhaust temperature is set within a predetermined range.

3. An engine-driven hot water supply circuit configured to drive a compressor using an engine, the engine-driven hot water supply circuit comprising:
a refrigerant-water heat exchanger that exchanges heat between an exhaust refrigerant and a supply water;
a water-water heat exchanger disposed downstream of the refrigerant-water heat exchanger that exchanges heat between an engine cooling water and the supply water; and
an evaporator to evaporate a refrigerant through heat exchange with an air,
wherein an RPM of the engine is decreased when a temperature of the supply water at an outlet port of the water-water heat exchanger is higher than a target temperature,
after the engine RPM has reached a lower limit RPM and if the temperature of the supply water is higher than the target temperature, an exhaust gas valve, which bypasses an exhaust path and an intake path of the compressor, is opened , and
an upper limit of an opening degree of the expansion valve disposed upstream of the evaporator is adjusted such that a differential value between an air temperature and an evaporation temperature, which is determined based on refrigerant pressure in the intake path of the compressor, is set within a predetermined range.

4. An engine-driven hot water supply system including an engine-driven hot water supply circuit claimed in any one of claim 1 to claim 3.
